# EUROPÄISCHE PATENTSCHRIFT

(11) **EP 0 739 084 B1**
(45) Veröffentlichungstag und Bekanntmachung des Hinweises auf die Patenterteilung: **24.07.2002**
(21) Anmeldenummer: 96105919.3
(22) Anmeldetag: 16.04.1996
(51) Int. Cl.: H02P 5/17, H02P 5/16, H02P 6/06, B60L 11/18

(54) **Verfahren zum Steuern oder Regeln eines Elektromotors, und Anordnung zur Durchführung eines solchen Verfahrens**
Method for control or regulation of an electric motor and arrangement for executing such a method
Procédé de commande ou réglage d'un moteur électrique et dispositif pour mettre en oeuvre ce procédé

(30) Priorität: 22.04.1995 DE 29506843 U; 22.04.1995 DE 29506842 U
(43) Veröffentlichungstag der Anmeldung: 23.10.1996
(73) Patentinhaber: PAPST-MOTOREN GmbH & Co. KG, 78106 St Georgen (DE)
(72) Erfinder: Lukenich, Stefan, 78224 Singen (DE); von der Heydt, Thomas, 78112 St. Georgen (DE); Rappenecker, Hermann, Dipl.-Ing., 78147 Vöhrenbach (DE)

(56) Entgegenhaltungen:
- EP-A- 0 444 672
- EP-A- 0 456 345
- EP-A- 0 492 070
- EP-A- 0 501 036
- DE-A- 3 603 924

## Beschreibung

Die Erfindung betrifft ein Verfahren zum Steuern oder Regeln eines Elektromotors, und eine Anordnung zur Durchführung eines solchen Verfahrens.

Bei derartigen Motoren stellt sich oft das Problem, eine Drehzahl mit geringem Aufwand zu steuern oder zu regeln, wobei andere Motorparameter zu berücksichtigen sind, z.B. der Motorstrom, der nicht zu hoch werden darf, oder bei einem Bremsvorgang die vom Motor generatorisch erzeugte Spannung, die ebenfalls einen bestimmten Wert nicht überschreiten sollte, oder der Bremsstrom bei einem solchen Bremsvorgang, der ebenfalls nicht zu hoch werden sollte.

Aus der EP-A-0 444 672 kennt man eine Anordnung mit Gleichstrommotor und PWM-Steller. Diese Anordnung dient zum Antrieb eines Rollstuhls, der eine zulässige Höchstgeschwindigkeit nicht überschreiten darf. Wenn dieser Rollstuhl bergauf fährt, steigt der Motorstrom an, und dieser Anstieg wird dazu ausgenutzt, um das Tastverhältnis des PWM-Stellers automatisch zu erhöhen, gewöhnlich auf 100 %, damit der Motor bergauf mit voller Leistung arbeitet.

Aus der EP-A1-0 501 036 kennt man ebenfalls einen Antrieb mit Gleichstrommotor und PWM-Steller. Dies ist ein sogenannter Vierquadrantenregler. Dieser Antrieb wird in einem Rollstuhl verwendet, der in beiden Fahrtrichtungen eine vorgegebene Höchstgeschwindigkeit nicht überschreiten darf. Der Antrieb hat einen Fahrregler und einen Bremsregler. Beim Übergang vom Fahrbetrieb zum Bremsbetrieb könnten gleichzeitig Fahr-Stromimpulse und Brems-Stromimpulse auftreten, was zu einem internen Brückenkurzschluss führen würde. Um das zu vermeiden, wird der Stellbereich der PWM-Steller für Fahren und Bremsen so gelegt, dass bei einem Drehzahl-Sollwertsignal um den Wert 0 herum weder Fahr-Stromimpulse noch Brems-Stromimpulse erzeugt werden. Dies ergibt jedoch ein ungutes Fahrgefühl, weil dann in diesem Bereich der Antrieb nicht auf Änderungen eines Stellwerts reagiert.

Aus der EP-A1-0 492 070 kennt man einen Fahrantrieb für Flurförderfahrzeuge. Der hierbei verwendete Gleichstrom-Reihenschlussmotor erhält seinen Strom in Form von Stromimpulsen, deren Tastverhältnis von einem PWM-Steller gesteuert wird. Die Spannung UA an diesem Motor und der Strom I durch diesen Motor werden in Abständen von etwa 5 ms und immer kurz vor Ende eines Stromimpulses erfasst. Anschließend wird ein Quotient UA/I gebildet, und dieser Quotient wird mit einem vorgegebenen Quotienten verglichen, der einem gewünschten Arbeitspunkt des Motors entspricht. Das Resultat dieses Vergleichs wird dem PWM-Steller zugeführt. Durch die erforderliche Verarbeitung der erfassten Werte entstehen unerwünschte zeitliche Verzögerungen, d.h. ein zu hoher Motorstrom wirkt nur indirekt und mit zeitlicher Verzögerung auf den PWM-Steller.

Es ist deshalb eine Aufgabe der Erfindung, ein neues Verfahren zum Steuern oder Regeln eines solchen Motors, und eine neue Anordnung mit einem über mindestens einen Halbleiterschalter mit Strom versorgten Motor, bereitzustellen, bei dem bzw. der dann, wenn ein bestimmtes vorrangiges Signal auftritt, dieses vorrangig vor einem anderen Signal berücksichtigt wird.

Diese Aufgabe wird durch ein Verfahren gemäß Anspruch 1 bzw. durch eine Anordnung gemäß Anspruch 10 gelöst. Man erreicht so, dass der Motorstrom je nach der augenblicklich mit höchster Priorität zu berücksichtigenden Motorgröße gesteuert oder geregelt wird. Besonders vorteilhaft ist es, dass man durch dieses Verfahren eine sehr schnelle Reaktion erhält, weil die Einwirkung direkt am Eingang des PWM-Stellers erfolgt, so dass z.B. ein zu hoher Motorstrom sofort begrenzt wird, weil über die vom zweiten Signal gesteuerte Widerstandsanordnung das Potenzial am Eingang des PWM-Stellers - und damit dessen Tastverhältnis-ohne wesentliche zeitliche Verzögerung verändert wird. Ebenso kann nach Anspruch 5 auf diese Weise eine zu hohe Spannung am Gleichstrom-Zwischenkreis des Motors sofort berücksichtigt werden, damit bei einem Bremsvorgang ein zu hoher Anstieg dieser Spannung sicher vermieden wird.

Sofern der am Messwiderstand erfasste Strom die Form von Impulsen hat, wie das bei elektronisch kommutierten Motoren häufig der Fall ist, wird gemäß Anspruch 11 in bevorzugter Weise mindestens ein Filter zwischen dem Messwiderstand und dem Eingang des PWM-Stellers vorgesehen, um diese Impulse zu glätten und dadurch auch in diesem Fall eine effektive Strombegrenzung zu ermöglichen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: ein Blockschaltbild eines ersten Ausführungsbeispiels einer erfindungsgemäßen Anordnung,
- Fig. 2: ein Schaltbild, welches Einzelheiten der Anordnung nach Fig. 1 zeigt,
- Fig. 3a, 3b und 3c: Schaubilder zur Erläuterung der Anordnung nach Fig. 2,
- Fig. 4: ein zweites Ausführungsbeispiel der Erfindung, welches die Anwendung bei einem elektronisch kommutierten Motor zeigt,
- Fig. 5: ein Schaltbild, welches Einzelheiten der Anordnung nach Fig. 4 darstellt,
- Fig. 6: ein Schaltbild, welches eine Variante zu Fig. 5 zeigt,
- Fig. 7: ein Blockschaltbild eines elektronisch kommutierten Motors,
- Fig. 8A: eine Tabelle mit logischen Gleichungen,
- Fig. 8B: eine Brückenschaltung für den Motor nach Fig. 7, die gemäß der Tabelle in Fig. 8A angesteuert wird,
- Fig. 9: eine Darstellung der Hallsignale des Motors nach Fig. 7, und der zugehörigen Strangströme,
- Fig. 10: eine Darstellung einer Kommutierungssteuerung für den Motor der Fig. 7, und
- Fig. 11: eine Darstellung analog Fig. 10, welche zusätzliche Elemente enthält, die für den Bremsbetrieb des Motors und für dessen PWM-Steuerung erforderlich sind.

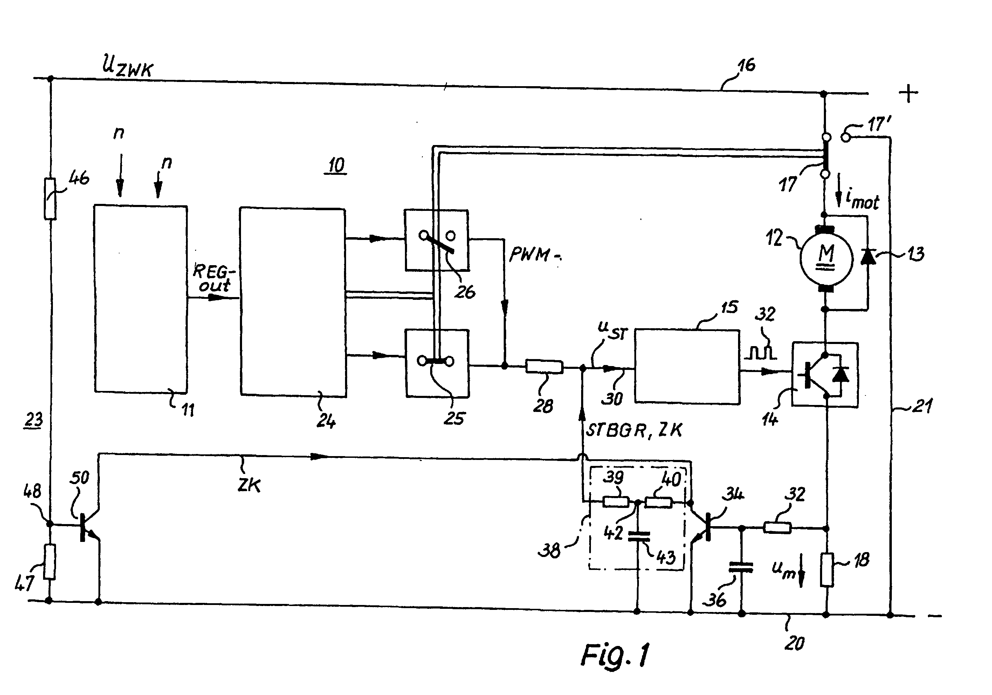

Fig. 1 zeigt eine erfindungsgemäße Anordnung 10, welche dazu dient, die Drehzahl eines Gleichstrommotors 12 zu regeln und dabei den durch diesen Motor fließenden, impulsförmigen Motorstrom iₘₒₜ auf einen vorgegebenen Höchstwert zu begrenzen. Femer dient diese Anordnung dazu, bei Überschreiten einer durch einen Drehzahlregler 11 vorgegebenen Drehzahl nₛₒₗₗ den Motor 12 auf Bremsbetrieb umzuschalten, bis dessen Drehzahl so weit abgesenkt ist, daß die gewünschte Drehzahl annähernd wieder erreicht ist. Antiparallel zum Motor 12 ist eine Freilaufdiode 13 geschaltet.

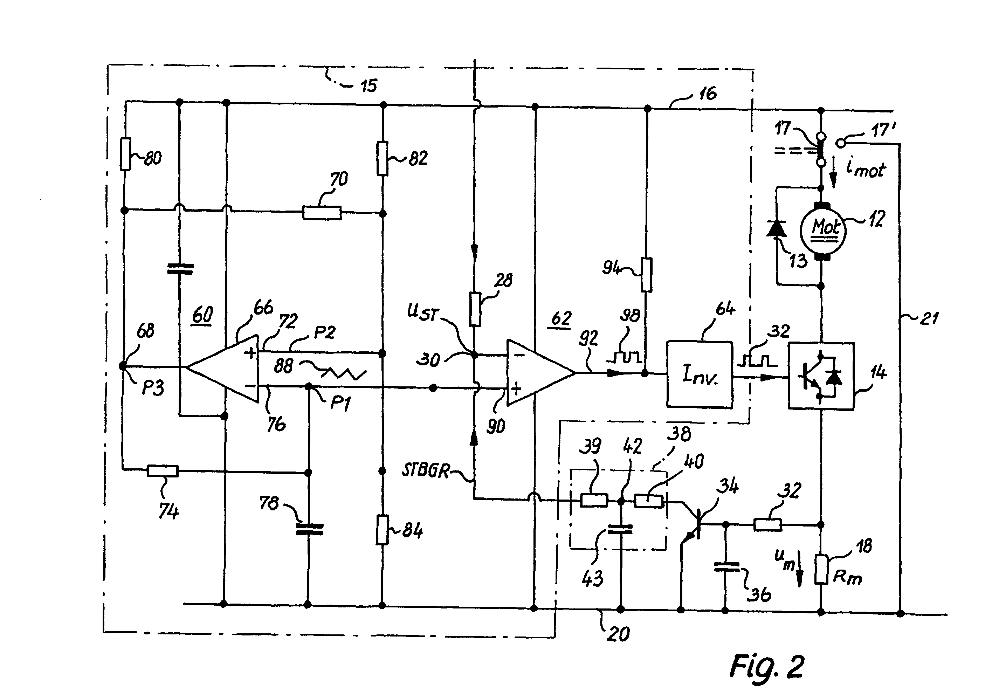

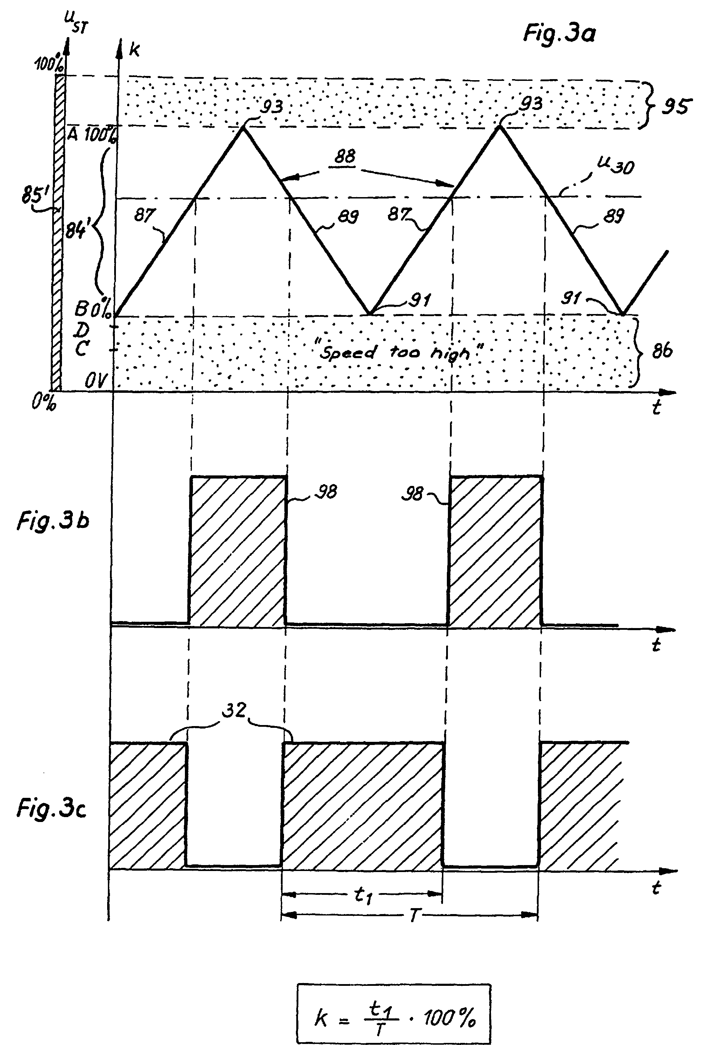

In Reihe mit dem Motor 12 ist ein steuerbarer Halbleiterschalter 14 angeordnet, der von einem PWM-Steller 15 gesteuert wird, welch letzterer hinsichtlich seines Aufbaus eine Besonderheit aufweist, die anhand der Fig. 2 und 3 näher erläutert wird. In Reihe mit dem Halbleiterschalter 14 liegt ein Meßwiderstand 18, an dem im Betrieb eine Meßspannung uₘ entsteht, die zur Strombegrenzung verwendet wird.

Der Motor 12 ist über einen Umschalter 17 in der dargestellten Weise an eine Plusleitung 16 angeschlossen, und von dieser Plusleitung ausgehend geht der Strompfad über den Umschalter 17 zum Motor 12, dann zum Halbleiterschalter 14, zum Meßwiderstand 18, und zu einer Minusleitung 20. Wird der Umschalter 17 in seine Stellung 17' umgeschaltet, so stellt er eine Kurzschlußverbindung 21 für den Motor 12 her, über die dieser Motor gebremst wird, wobei die Höhe des Bremsstroms dadurch bestimmt wird, daß der Halbleiterschalter 14 mit einem entsprechenden Tastverhältnis durch den PWM-Steller 15 aus- und eingeschaltet wird. Dabei wird ebenfalls über den Meßwiderstand 18 der Bremsstrom gemessen, und durch die Strombegrenzung wird verhindert, daß ein zu hoher Bremsstrom fließt. Dies ist besonders dann wichtig, wenn der Motor 12 einen permanentmagnetischen Rotor enthält, da ein zu hoher Bremsstrom zur teilweisen oder vollständigen Entmagnetisierung des Rotormagneten führen könnte. (Eine teilweise Entmagnetisierung bedeutet eine Schwächung des Rotormagneten.)

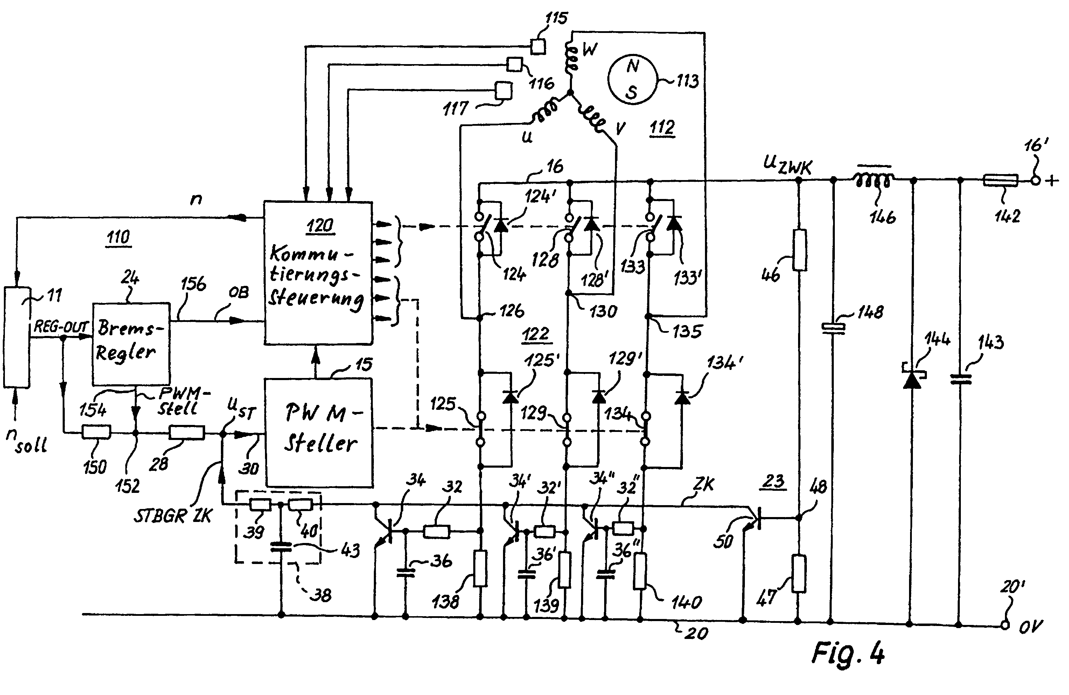

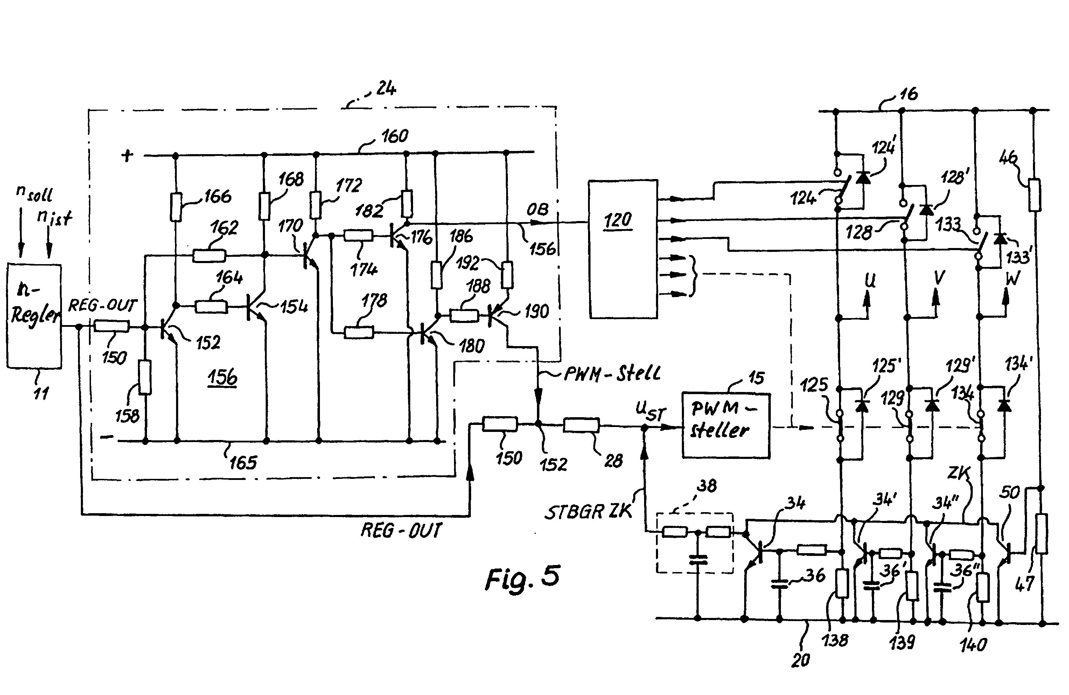

Die Anordnung 10 enthält ferner eine Überwachungsschaltung 23, welche die Spannung zwischen der Plusleitung 16 und der Minusleitung 20 überwacht und welche ebenfalls dazu dient, den Strom im Motor 12 dann zu reduzieren, wenn diese Spannung U_{ZWK} zu hoch wird. Die Schaltung 23 ist naturgemäß dann besonders von Vorteil, wenn eine regeneratorische Bremsung verwendet wird, wie sie in den Fig. 4 und 5 dargestellt ist, da hierbei durch den Bremsvorgang die Spannung zwischen den Leitungen 16 und 20 kurzzeitig beträchtlich ansteigen kann, was zu Problemen führen könnte, wenn dieser Anstieg nicht begrenzt würde.

Dem Drehzahlregler 11 wird, wie in Fig. 1 dargestellt, ein Drehzahl-Sollwert nₛₒₗₗ zugeführt, ferner ein Drehzahl-Istwert nᵢₛₜ, der z.B. von einem (nicht dargestellten) Tachogenerator geliefert werden kann, der mit dem Motor 12 gekoppelt ist. Bei einem elektronisch kommutierten Motor wird dieser Drehzahlistwert bevorzugt den Hallsignalen dieses Motors entnommen.

Der Drehzahlregler 11 erzeugt an seinem Ausgang ein Regler-Ausgangssignal REG-OUT, das einem Bremsregler 24 zugeführt wird. Wenn dieses Regler-Ausgangssignal in einem Bereich liegt, der in Fig. 3a mit 86 bezeichnet ist, zeigt dies an, daß die Drehzahl des Motors zu hoch ist, und daß folglich der Motor 12 gebremst werden muß. Der Bremsregler 24 bewirkt dann über eine in ihm enthaltene Bremslogik gleichzeitig eine Umschaltung des Umschalters 17 in die Stellung 17', die Öffnung eines Schalters 25, und das Schließen eines Schalters 26. Der Schalter 25 dient, wenn er geschlossen ist, dazu, das Signal REG-OUT über einen hochohmigen Widerstand 28 (z.B. 470 kΩ) dem Eingang 30 des PWM-Stellers 15 als Steuerspannung u_{ST} zuzuführen. Der PWM-Steller 15 schaltet entsprechend der Höhe dieses Signals u_{ST} den Halbleiterschalter 14 aus und ein, wobei das Tastverhältnis k der Höhe der Spannung u_{ST} entspricht. Ist das Signal REG-OUT hoch, so bedeutet dies, daß der Motor zu langsam ist, und das Tastverhältnis k der Ausgangsignale 32 des PWM-Stellers 15 wird folglich hoch. (Die Definition des Tastverhältnisses k ist unten in Fig. 3 angegeben.) Steigt die Drehzahl an, so wird das Signal REG-OUT niedriger, und das Tastverhältnis der Signale 32 nimmt folglich ab, bis es an der Stelle B der Fig. 3a zu Null wird. In diesem Fall erhält dann der Motor 12 über den Halbleiterschalter 14 keinen Strom mehr zugeführt.

Steigt nun die Drehzahl trotzdem weiter an, weil der Motor 12 von seiner Last angetrieben wird, so wird das Signal REG-OUT noch kleiner, und an der Stelle C der Fig. 3a bewirkt die Bremslogik im Bremsregler 24 die Umschaltung der Schalter 17, 25 und 26.

Es ist also darauf hinzuweisen, daß das Signal u_{ST} einen Stellbereich 85' hat, der in Fig. 3a) schraffiert dargestellt ist und der größer ist als der vorgegebene Bereich 84' der Fig. 3a), in dem sich das Tastverhältnis k abhängig von u_{ST} kontinuierlich ändert. - In dem Bereich 95 der Spannung u_{ST}, der oberhalb des Wertes A der Fig. 3a) liegt, hat das Tastverhältnis k immer einen Wert von 100 %.

Durch die Umschaltung an der Stelle C wird das Signal REG-OUT vom Eingang 30 des PWM-Stellers 15 abgeschaltet, und an seiner Stelle wird über den Schalter 26 ein anderes Signal PWM-STELL über den hochohmigen Widerstand 28 dem Eingang 30 des PWM-Stellers 15 zugeführt. Dieses Signal PWM-STELL bestimmt dann als neues Steuersignal u_{ST} während des Bremsvorgangs das Tastverhältnis k der Ausgangsimpulse 32 des PWM-Stellers 15, also den Bremsstrom, der durch den Motor 12 fließt, und dieser Bremsstrom wird durch die vorhandene Strombegrenzung (Transistor 34) nach oben hin begrenzt.

Sinkt durch den Bremsvorgang die Drehzahl des Motors 12 in Richtung auf die gewünschte Drehzahl, so steigt das Signal REG-OUT wieder an, und wenn es in Fig. 3a den Wert D erreicht hat, bewirkt die Bremslogik im Bremsregler 24 ein erneutes Umschalten des Umschalters 17 in die in Fig. 1 dargestellte Stellung, ebenso eine Umschaltung der Schalter 25 und 26, so daß dem Eingang des PWM-Stellers 15 wieder das Regler-Ausgangssignal REG-OUT als Steuersignal zugeführt und der substituierte Stellwert PWM-STELL wieder abgeschaltet wird.

Auf diese Weise wird es möglich, bei einem Überschreiten der gewünschten Drehzahl nₛₒₗₗ die Drehzahl schnell wieder auf den gewünschten Wert zurückzuführen und so zu vermeiden, daß eine Last mit zu hoher Drehzahl angetrieben wird. Ebenso wird dann, wenn der Drehzahl-Sollwert rasch reduziert werden soll, z.B. von 3000 n auf 1200 n, ein solcher Bremsvorgang automatisch eingeleitet, und die Drehzahl wird dann ebenfalls, gesteuert durch den PWM-Steller 15, sehr rasch auf den neuen Sollwert heruntergefahren.

### Die Strombegrenzung

Die Spannung uₘ am Meßwiderstand 18 wird über einen Widerstand 32 der Basis eines npn-Transistors 34 zugeführt, dessen Emitter mit der Minusleitung 20 verbunden ist. Als Vorfilter ist zwischen dieser Basis und der Minusleitung 20 ein Kondensator 36 vorgesehen. Der Kollektor des Transistors 34 ist über ein T-Filter 38 (Zeitglied 1. Ordnung) mit dem Eingang 30 des PWM-Stellers 15 verbunden und führt diesem das Signal STBGR zu. Das T-Filter 38 enthält zwei in Reihe geschaltete Widerstände 39, 40, die zwischen dem Kollektor des Transistors 34 und dem Eingang 30 angeordnet sind, und deren Verbindungspunkt 42 über einen Kondensator 43 (z.B. 100 nF) mit der Minusleitung 20 verbunden ist.

Wie man ohne weiteres erkennt, wird dann, wenn die Spannung uₘ am Meßwiderstand 18 zu hoch ist, die Basis-Emitter-Schwellenspannung des Transistors 34 überschritten, so daß dieser leitend wird und den Eingang 30 des PWM-Stellers 15 über die Widerstände 39 und 40 mit der Minusleitung 20 verbindet. Da der Widerstand 28 hochohmig ist, die Widerstände 39 und 40 dagegen niederohmig (z.B. je 1 kΩ), bewirkt das Leitendwerden des Transistors 34, daß die Steuerspannung u_{ST} am Eingang 30 umso mehr abgesenkt wird, je stärker der Transistor 34 leitend wird, und zwar unabhängig von der Höhe des Signals REG-OUT oder des Signals PMW-STELL,d.h. das Signal STBGR für die Strombegrenzung ist diesen beiden anderen Signalen hierarchisch übergeordnet. - Für den Transistor 34 werden bevorzugt Transistoren verwendet, die hinsichtlich ihrer Basis-Emitter-Schwellenspannung selektiert sind, um ein exakt definiertes Einsetzen der Strombegrenzung zu erreichen.

### Die Spannungsbegrenzung 23

Diese weist zwei Spannungsteilerwiderstände 46, 47 auf, die in Reihe zwischen die Plusleitung 16 und die Minusleitung 20 geschaltet sind. Ihr Verbindungspunkt 48 ist mit der Basis eines npn-Transistors 50 verbunden, dessen Emitter mit der Minusleitung 20 und dessen Kollektor mit dem Kollektor des Transistors 34 verbunden ist. Das Signal am Kollektor des Transistors 50 wird mit ZK bezeichnet. Wird die Spannung U_{ZWK} zwischen den Leitungen 16 und 20 zu hoch, so wird der Transistor 50 leitend und stellt dann - ebenso wie der leitende Transistor 34, für den das bereits beschrieben wurde - eine Verbindung vom Eingang des PWM-Stellers 15 zur Minusleitung 20 her, wodurch auch in diesem Fall das Tastverhältnis der PWM-Signale 32 reduziert wird, um der zu hohen Betriebsspannung Rechnung zu tragen. Auf diese Weise wird, wie nachfolgend ausführlicher beschrieben, eine sehr einfache Überwachung und Begrenzung der Zwischenkreisspannung U_{ZWK} bei einem Motor mit regenerativer Bremsung möglich. - Der Transistor 50 entspricht den gleichen Kriterien wie der Transistor 34 (selektierter Transistor).

Fig. 2 erläutert einen bevorzugten Aufbau des PWM-Stellers 15, bei dem das verwendete Dreieckssignal 88 (Fig. 3a) zwischen einem dem Betrag nach von 0 verschiedenen Mindestwert 91 und einem dem Betrag nach höheren Maximalwert 93 oszilliert.

Der PWM-Steller 15 enthält als wesentliche Bestandteile einen Dreiecks-Oszillator 60, der z.B. mit einer Frequenz von 20 kHz schwingt, dazu einen Komparator 62, und einen Signal-Invertierer 64, an dessen Ausgang das impulsförmige PWM-Signal 32 auftritt, das auch in Fig. 3c dargestellt ist und das den Strom durch das Halbleiter-Schaltglied 14 steuert. (Bei einem Tastverhältnis von 100 % wird das Signal 32 zu einem Gleichspannungssignal).

Der Dreiecksoszillator 60 enthält einen Komparator 66, der zweckmäßig zusammen mit dem Komparator 62 als Doppelkomparator ausgebildet ist. Beide sind in der üblichen Weise zur Spannungsversorgung an die Plusleitung 16 und die Minusleitung 20 angeschlossen. Vom Ausgang 68 des Komparators 66 führt ein Mitkopplungswiderstand 70 (z.B. 4,3 kΩ) zu dessen Pluseingang 72, und ebenso führt ein Gegenkopplungswiderstand 74 (z.B. 22 kΩ) vom Ausgang 68 zum Minuseingang 76 des Komparators 66. Ein Kondensator 78 (z.B. 1 nF) liegt zwischen dem Minuseingang 76 und der Minusleitung 20. Der Ausgang 68 ist ferner über einen Widerstand 80 (z.B. 2,2 kΩ) mit der Plusleitung 16 verbunden. Der Pluseingang 72 ist über zwei gleich große Widerstände 82, 84 (z.B. je 10 kΩ) mit der Plusleitung 16 bzw. der Minusleitung 20 verbunden.

Ein derart aufgebauter Dreiecksoszillator 60 schwingt mit einer Frequenz von etwa 20 kHz, und die von ihm erzeugte Dreieckspannung 88 verläuft etwa symmetrisch zur halben Spannung zwischen den Leitungen 16 und 20. Z.B. beträgt bei den angegebenen Werten, und einer Betriebsspannung von 12 V, die Signalhöhe bei der unteren Spitze 91 (Fig. 3a) des Dreieckssignals 88 etwa 2 V, ist also von 0 verschieden, und bei der oberen Spitze 93 etwa 9 V.

Der Hub des Dreieckssignals 88 ist in Fig. 3a) mit 84' bezeichnet, wie bereits beschrieben, und dieser Hub 84' ist kleiner als der mögliche Gesamthub 85' des Signals u_{ST}. Das Dreieckssignal 88 hat also einen Offset 86 (Fig. 3a) zur Spannung 0 V, also zum Potential der Minusleitung 20, und dieser Offset beträgt beim Ausführungsbeispiel etwa 2 V, kann aber naturgemäß auch größer oder kleiner sein, je nach der Dimensionierung des Oszillators 60.

Das Dreieckssignal 88 am Minuseingang 76 wird dem Pluseingang 90 des Komparators 62 zugeführt. Dessen Minuseingang entspricht dem Eingang 30 der Fig. 1, und diesem Minuseingang 30 wird über den hochohmigen Widerstand 28 (470 kΩ) das Steuersignal u_{ST} zugeführt, wie bereits bei Fig. 1 beschrieben. Dieses Steuersignal kann entweder bestimmt sein vom Signal STBGR vom Strombegrenzungstransistor 34, oder von der Spannungsüberwachung 23 (Fig. 1), oder vom Stellwert PWM-STELL für den Bremsvorgang, oder vom Regler-Ausgangssignal REG-OUT. Das Signal STBGR wird durch die Höhe des Stromes iₘₒₜ im Motor 12 bestimmt, d.h. je höher dieser Strom ist, um so mehr wird - ab einem vorgegebenen Schwellwert - der Transistor 34 leitend und zieht das Potential des Minuseingang 30 nach unten, wodurch das Tastverhältnis k reduziert wird, und zwar umso mehr, je höher der Motorstrom wird.

Der Ausgang 92 des Komparators 62 ist über einen Widerstand 94 (z.B. 2 kΩ) mit der Plusleitung 16 verbunden, ferner mit dem Eingang des Invertierglieds 64, an dessen Ausgang das PWM-Signal 32 erzeugt wird, welches das Halbleiter-Schaltglied 14 steuert.

### Arbeitsweise von Fig. 2

Zur Erläuterung der Wirkungsweise des Dreiecksgenerators 60 wird auf Fig. 2 Bezug genommen. Dort sind drei Potentiale angegeben, nämlich das Potential P1 am Minuseingang 76 des Komparators 66 (z.B. LM 2901), das Potential P2 an dessen Pluseingang 72, und das Potential P3 an dessen Ausgang 68.

Beim Einschalten der Anordnung wird zunächst durch den (entladenen) Kondensator 78 (z.B. 1 nF) das Potential P1 auf dem Potential der Minusleitung 20 gehalten. Dies entspricht der Anfangsbedingung für einen Reset. Das Potential P3 nimmt folglich den Wert der Plusleitung 16 an, da in diesem Fall das Potential des Pluseingangs 72 des Komparators 66 höher ist als das Potential des Minuseingangs 76. Der Kondensator 78 beginnt deshalb, sich über die Widerstände 80 und 74 zu laden. Dies ist in Fig. 3 der ansteigende Teil 87 des Dreieckssignals 88, welches dem Potential P1, also der Spannung am Kondensator 78, entspricht. Das Potential P2 ergibt sich aus
a) der Parallelschaltung der Widerstände 82, 80 und 70, und
b) der Größe des unteren Spannungsteilerwiderstands 84.

Die Widerstände 82 und 84 sind bevorzugt gleich groß, z.B. je 10 kΩ, der Widerstand 70 hat z.B. 4,3 kΩ, und der Widerstand 80 z.B. 2,2 kΩ. Der Widerstand 74 hat z.B. 22 kΩ. Bei einer Betriebsspannung von 12 V zwischen den Leitungen 16 und 20 beträgt das Potential P2 in diesem Fall etwa 9 V.

Durch das Aufladen des Kondensators 78 wird schließlich das Potential P1 höher als das Potential P2, und dadurch schaltet der Ausgang 68 auf das Potential der Minusleitung 20 um, d.h. das Potential P3 macht einen Sprung in negativer Richtung. Deshalb beginnt nun der Kondensator 78, sich über den Widerstand 74 zu entladen, und dies ist in Fig. 3 der abfallende Teil 89 des Dreieckssignals 88. Das Potential P2, also der Schwellwert des Komparators 66, ändert sich hierdurch ebenfalls, und ergibt sich nun aus
a) der Parallelschaltung der Widerstände 84 und 70, und
b) dem Spannungsteilerwiderstand 80.

Dieses neue Potential P2 beträgt etwa 2 V.

Fällt durch die Entladung des Kondensators 78 das Potential P1 unter das Potential P2, so schaltet der Komparator 66 wieder auf "Ein", d.h. das Potential P3 an seinem Ausgang wird wieder hoch.

Der beschriebene Vorgang wiederholt sich periodisch, und das Potential P1 steigt deshalb wieder an bis zum Potential P2, das durch die Widerstände 80, 70 und 82 bestimmt ist. Danach springt das Potential P3 am Ausgang 68 des Komparators wieder auf das Potential der Minusleitung, etc. Hierdurch entsteht das Dreieckssignal 88.

Die Ladezeit des Kondensators 78 ergibt sich durch die Reihenschaltung der Widerstände 80 und 74. Seine Entladezeit ergibt sich durch den Widerstand 74. Das Potential P2 am Pluseingang 72 schwankt bei den beschriebenen Werten etwa zwischen 9 V und 2 V und liegt etwa symmetrisch zu einer mittleren Spannung von ca. 5,5 V, die etwa der halben Spannung zwischen den Leitungen 16 und 20 entspricht. Eine kleine Unsymmetrie des Signals 88 ergibt sich durch den Widerstand 80.

Wesentlich erscheint, daß ein Tastverhältnis k von 0 % bereits bei einer Spannung von 2 V und darunter erreicht wird, so daß also im gesamten Spannungsbereich von 0 bis 2 V der Motorstrom auf 0 gehalten wird. Dies ist besonders vorteilhaft bei einer Strombegrenzung der dargestellten Art, da auch bei einem hohen Wert des Signals uₘ am Meßwiderstand 18, also einem hohen Motorstrom iₘₒₜ, das Signal am Ausgang des T-Filters 38, das dem Minuseingang 30 des Komparators 62 zugeführt wird, nicht völlig bis auf das Potential der Minusleitung 20 fällt, sondern etwas positiv bleibt. Diese kleine Restspannung liegt aber dann im Spannungsbereich von 0 bis 2 V, innerhalb dessen das Tastverhältnis k auf 0 % eingestellt wird, so daß die Strombegrenzung trotz solcher kleinen Restspannungen sicher funktioniert.

Anders gesagt, fällt im Betrieb das Potential P1 am Pluseingang des Komparators 62 nicht unter 2 V, so daß jedes Potential am Minuseingang 26 dieses Komparators, das unter 2 V, also außerhalb des vorgegebenen Bereichs 84', liegt, ein Tastverhältnis des PWM-Signals 32 von 0 % zur Folge hat.

Im normalen Betrieb bewirkt die Strombegrenzung nur eine Reduzierung des Motorstroms, d.h. das Potential am Punkt 30 liegt dann im vorgegebeben Bereich 84' oberhalb 2 V entsprechend einem Tastverhältnis k von größer als 0 %, aber das Tastverhältnis wird durch das Einsetzen der Strombegrenzung in Richtung zu einem niedrigeren Wert verschoben.

Durch den Offsetbereich 86 wird auch vermieden, daß bei Transistoren 34 oder 50 mit stärkeren Toleranzabweichungen eine fehlerhafte Strombegrenzung auftritt. Außerdem wird zur Steuerung des Bremsvorgangs der Umstand ausgenützt, daß bei einer zu hohen Motordrehzahl das Regler-Ausgangssignal REG-OUT im Bereich von 0 bis 2 V liegt. Deshalb werden, wenn REG-OUT in diesem Spannungsbereich liegt, der Bremsregler 24 und die Bremslogik betätigt, um einen Bremsvorgang des Motors 12 einzuleiten, wie das bereits bei Fig. 1 beschrieben wurde.

Im Betrieb erzeugt also der Dreiecksoszillator 60 die in Fig. 3a dargestellte dreieckförmige Spannung 88. Je nach der Höhe des Potentials am Minuseingang 30 des Komparators 62, das in Fig. 3a mit u₃₀ bezeichnet ist, erhält man am Ausgang des Komparators 62 Rechteckimpulse 98, die umso kürzer werden, je höher das Potential u₃₀ am Minuseingang 30 wird. Die Höhe dieses Potentials bestimmt also das Tastverhältnis der Impulse 92, und durch das Invertierglied 64 werden diese Impulse invertiert, und man erhält dann am Ausgang des Invertierglieds 64 die PWM-Impulse 32, deren Tastverhältnis k, das unten in Fig. 3 definiert ist, ebenfalls von der Höhe des Steuersignals u_{ST} am Minuseingang 30 abhängt. Wird dieses Signal positiver, so nimmt das Tastverhältnis k und damit der Motorstrom zu, und wird dieses Signal negativer, so nimmt das Tastverhältnis und damit der Motorstrom ab.

Im Normalbetrieb wird dem Minuseingang 30 über den hochohmigen Widerstand 28 das positive Regler-Ausgangssignal REG-OUT zugeführt. Dieses bestimmt dann das Tastverhältnis des PWM-Signals 32. Nimmt jedoch der Strom durch den Motor 12 über einen bestimmten Grenzwert hinaus zu, so wird der Transistor 34 leitend, und dadurch entsteht am Minuseingang 30 das Signal STBGR, d.h. das Potential an diesem Eingang verschiebt sich in negativer Richtung, weil ein Strom vom Eingang 30 über den Transistor 34 zur Minusleitung 20 fließt. Dadurch nimmt das Tastverhältnis k der PWM-Impulse 32 ab, und zwar umso mehr, je höher der Motorstrom wird. Auf diese Weise erhält man eine sanfte Strombegrenzung, die praktisch in analoger Weise arbeitet und keine zusätzlichen Motorgeräusche oder zusätzlichen EMV-Störungen verursacht.

In gleicher Weise arbeitet die Strombegrenzung dann, wenn dem Minuseingang 30 bei einem Bremsvorgang das Signal PWM-STELL zugeführt wird.

Bei der Anordnung nach Fig. 1 werden für die Umschaltung auf Bremsen - durch einen niedrigen Wert des Signals REG-OUT - mechanische Schalter 17, 25 und 26 verwendet. Dies ist bei einem Regler weniger erwünscht, da solche Schalter Geräusche verursachen und eine begrenzte Lebensdauer haben.

Fig. 4 zeigt deshalb eine Ausführungsform einer erfindungsgemäßen Anordnung 110, die stattdessen elektronische Schalter verwendet, wobei als Motor 112 ein elektronisch kommutierter Motor (ECM) verwendet wird. Gleiche oder gleichwirkende Teile wie in den vorhergehenden Figuren werden auch hier mit denselben Bezugszeichen bezeichnet und gewöhnlich nicht nochmals beschrieben.

Der ECM 112 ist hier - als Beispiel - dreisträngig dargestellt, mit drei Statorsträngen (Statorphasen) U, V und W, die im Beispiel in Stern geschaltet sind. Ebenso wäre eine Dreiecksschaltung möglich, und ebenso eine andere Strangzahl. Der Motor arbeitet sechspulsig, d.h. pro Rotordrehung von 360° el. erhält sein Stator sechs Stromimpulse. Hierzu wird auf den Aufsatz von Dr. Rolf Müller in "asr - digest für angewandte Antriebstechnik", 1977, S. 27 bis 31, verwiesen, wo viele derartige Motoren beschrieben sind. Der permanentmagnetische Rotor des Motors 112 ist mit 113 bezeichnet und nur symbolisch dargestellt. Selbstverständlich kann der Motor 112 auch einen Rotor 113 haben, der durch Zuführung von Strom erregt wird, und nicht durch Permanentmagnete.

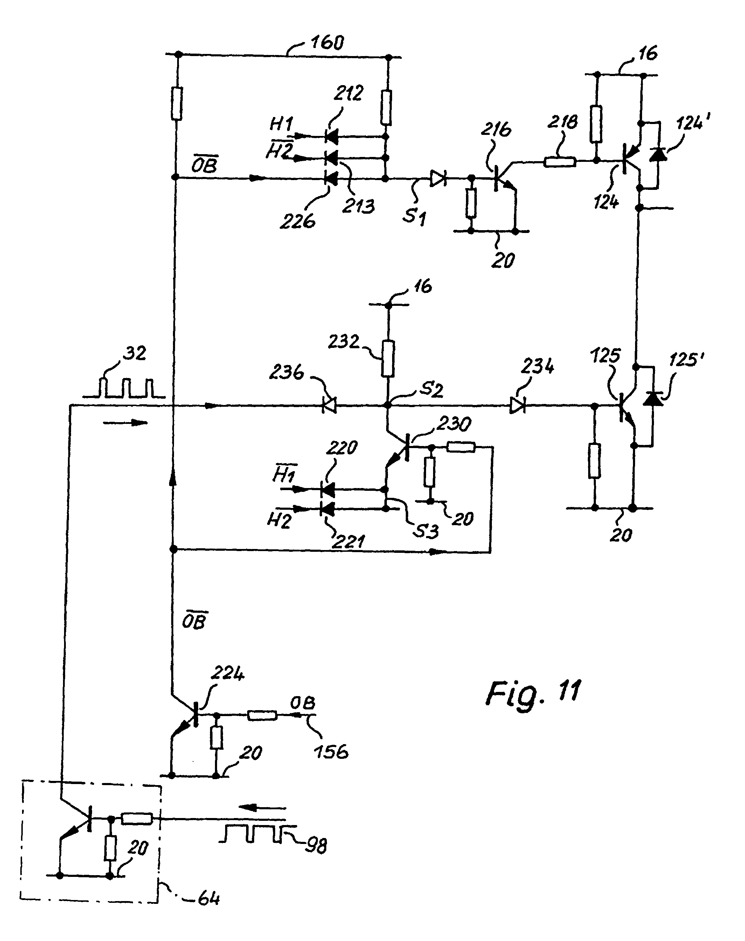

Der Motor 112 hat ferner bei dieser Version drei Hallgeneratoren 115, 116 und 117, deren Ausgangssignale einer Kommutierungssteuerung 120 zugeführt werden, die aus diesen Hallsignalen auch ein Drehzahl-Istwertsignal nᵢₛₜ ableitet, das dem Drehzahlregler 11 (gewöhnlich einem PI-Regler) zugeführt wird. Außerdem ist diese Kommutierungssteuerung 120 dazu ausgebildet, in der üblichen Weise Kommutierungssignale für die Halbleiterschalter der Brückenschaltung 122 zu liefern. Die Form dieser Kommutierungssignale wird durch das Ausgangssignal des PWM-Stellers bestimmt, d.h. diese werden durch das PWM-Signal mit einer hohen Frequenz (z.B. 20...25 kHz) ständig ein- und ausgeschaltet, wie das nachfolgend anhand von Fig. 11 an einem Beispiel erläutert wird, vgl. dort die logische Verknüpfung der PWM-Signale 32 mit den Rotorstellungssignalen H1/ und H2, um den Brückentransistor 125 zu steuern.

Die Hallgeneratoren sind nur rein schematisch dargestellt. Es ist auch ein Betrieb ohne Hallgeneratoren möglich, wenn die sogenannte Sensorless-Technik verwendet wird.

Die Kommutierungssteuerung 120 ist also in üblicher Weise ausgebildet, um die sechs steuerbaren Halbleiterschalter der Vollbrückenschaltung 122 anzusteuern. Diese Halbleiterschalter sind zur besseren Veranschaulichung als mechanische Schalter dargestellt, sind aber in der Realität Leistungstransistoren, z.B. MOSFETs. Ein erster Zweig der Brückenschaltung 122 enthält zwei Halbleiterschalter 124, 125, an deren Verbindungspunkt 126 der Strang U angeschlossen ist. Ein zweiter Zweig enthält zwei Halbleiterschalter 128, 129, an deren Verbindungspunkt 130 der Strang V angeschlossen ist. Ein dritter Zweig enthält oben einen Halbleiterschalter 133 und unten einen Halbleiterschalter 134, an deren Verbindungspunkt 135 der Strang W angeschlossen ist. Antiparallel zu den einzelnen Halbleiterschaltern liegen jeweils Dioden 124', 125', 128', 129', 133' und 134', wie in Fig. 4 dargestellt.

Die oberen Halbleiterschalter 124, 128 und 133 sind an eine Plusleitung 16 angeschlossen. In Reihe mit den unteren Halbleiterschaltern 125, 129 und 134 liegt jeweils ein Strommeßwiderstand 138, 139 bzw. 140, die alle an eine Minusleitung 20 angeschlossen sind. Zwischen den Leitungen 16 und 20 liegt eine sogenannte Zwischenkreisspannung U_{ZWK} von z.B. 24 V, die beim regenerativen Bremsbetrieb des Motors 112 auf mehr als das Doppelte ansteigen kann, weshalb die bereits bei Fig. 1 beschriebene Spannungsbegrenzung 23 vorgesehen ist, die beim Bremsbetrieb diese Zwischenkreisspannung nach oben hin begrenzt, z.B. auf 48 V.

Die äußeren Anschlüsse zur Stromzufuhr sind mit 16' und 20' bezeichnet. Vom Anschluß 16' führt eine Sicherung 142 zu einem Siebkondensator 143 und einer Schutzdiode 144, welche gegen hohe Überspannungen schützt, z.B. gegenüber Spannungen von mehr als 68 V. Außer der Sicherung 142 ist auch eine Siebdrossel 146 in die Verbindung vom Anschluß 16' zur Plusleitung 16 eingeschaltet. Links von der Drossel 146 ist noch ein Siebkondensator 148 vorgesehen. Die Spannungsüberwachung 23 ist, wie dargestellt, parallel zu diesem Siebkondensator 148 angeordnet und entspricht in ihrem Aufbau exakt der Anordnung 23 nach Fig. 1, so daß auf die dortige Beschreibung verwiesen werden kann.

Die Spannung am Meßwiderstand 138 wird - ebenfalls völlig analog zu Fig. 1-über einen Widerstand 32 der Basis eines npn-Transistors 34 zugeführt, dem ein Filterkondensator 36 zugeordnet ist. Der Kollektor des Transistors 34 ist über das T-Filter 38 mit dem Eingang 30 des PWM-Stellers 15 verbunden.

Den Meßwiderständen 139 und 140 sind, wie dargestellt, völlig analoge Meßschaltungen zugeordnet, die deshalb mit denselben Bezugszeichen bezeichnet sind, aber mit einem nachgestellten Apostroph oder mit zwei nachgestellten Apostrophen. Die Kollektoren der vier Transistoren 34, 34', 34" und 50 sind miteinander verbunden; diese vier Transistoren sind selektierte Transistoren mit einer im wesentlichen identischen Basis-Emitter-Schwellenspannung U_{BE}, so daß sie alle bei derselben Spannung zu leiten beginnen und dann eine Verbindung vom Eingang 30 zur Minusleitung 20 herstellen, wodurch die Steuerspannung u_{ST} am Eingang 30 reduziert und damit das Tastverhältnis k verringert wird.

Das Regler-Ausgangssignal REG-OUT des Drehzahlreglers 11 wird dem Bremsregler 24 zugeführt, und es wird über einen Widerstand 150 (z.B. 22 kΩ) einem Knotenpunkt 152 zugeführt, der über den hochohmigen Widerstand 28 (z.b. 460 kΩ) mit dem Eingang 30 des PWM-Stellers 15 verbunden ist.

Der Bremsregler 24 erzeugt an seinem Ausgang 154 dann ein das Signal REG-OUT substituierendes Stellsignal PWM-STELL, wenn die Drehzahl des Motors 112 so weit über den eingestellten Wert angestiegen ist, daß REG-OUT in Fig. 3a den niedrigen Wert C erreicht. Da REG-OUT dem Knotenpunkt 152 über den relativ hochohmigen Widerstand 150 (22 kΩ) zugeführt wird, PWM-STELL dagegen direkt, ersetzt (substituiert) das Signal PWM-STELL bei seinem Auftreten, also bei einer zu hohen Drehzahl des Motors 112, das Signal REG-OUT.

Wenn der Bremsregler 24 das Signal PWM-STELL an seinem Ausgang 154 erzeugt, erzeugt er auch an seinem Ausgang 156 ein Signal OB, das der Kommutierungssteuerung 120 zugeführt wird, wodurch diese dann die oberen Halbleiterschalter 124, 128 und 133 der Brückenschaltung 122 öffnet, also nichtleitend macht, und die unteren Brückenschalter 125, 129 und 134 ständig leitend macht, also einschaltet, wie in Fig. 4 beispielhaft dargestellt. Der Motor 112 arbeitet dann als Generator, und seine generatorisch erzeugte Spannung wird über die Dioden 124', 128' und 133' der Plusleitung 16 zugeführt, so daß die Zwischenkreisspannung an dieser Leitung beträchtlich ansteigen kann, wie bereits beschrieben, was zu Schäden durch Überspannungen führen kann.

Auch können bei einem solchen Bremsvorgang durch die generatorische Bremsung erhebliche Ströme im Motor 112 fließen, die zu einer teilweisen Entmagnetisierung der im Motor verwendeten Dauermagnete führen können, und das muß unbedingt vermieden werden.

Ein Anstieg der Zwischenkreisspannung, z.B. über 48 V hinaus, wird durch die Spannungsüberwachung 23 vermieden, denn deren Transistor 50 wird in diesem Fall leitend und reduziert hierdurch die Steuerspannung u_{ST} am Eingang 30 des PWM-Stellers 15, so daß dieser die unteren Brückentransistoren 125, 129 und 134 mit dem Tastverhältnis k periodisch öffnet und schließt, das der Steuerspannung u_{ST} entspricht. Hierdurch wird die Zwischenkreisspannung U_{ZWK} nach oben hin sicher begrenzt.

Ein zu hoher Strom durch die Statorstränge U, V oder W wird durch die Meßwiderstände 138, 139 und 140 verhindert, welche den einzelnen Strängen U, V, W zugeordnet sind und welche bei Überstrom ein Ansprechen der einzelnen Transistoren 34 bzw. 34' bzw. 34" bewirken, die ebenfalls die Spannung u_{ST} am Eingang 30 reduzieren und dadurch das Tastverhältnis k umso stärker reduzieren, je höher diese Ströme werden.

Da also bei einem solchen transienten Bremsvorgang sowohl die generatorisch erzeugte Spannung des Motors 112 wie auch dessen Statorströme begrenzt werden, kann man diese Begrenzung auch als Leistungsbegrenzung oder "Wattbegrenzung" bezeichnen, d.h. der Bremsvorgang verläuft rasch, aber strikt innerhalb der Leistungsgrenzen des angeschlossenen Motors 112. (In der Praxis dauert ein solcher Bremsvorgang meist nur wenige Sekunden, bei einem Rolladenmotor z.B. ca. 30 Sekunden.) Die gewünschte Drehzahl wird auch nach einer Änderung des Drehzahl-Sollwerts innerhalb kürzester Zeit und praktisch ruckfrei wieder erreicht.

Nach dem Bremsvorgang, wenn der Motor 112 wieder mit der gewünschten Drehzahl arbeitet, steigt die Regler-Ausgangsspannung REG-OUT wieder an, und wenn sie in Fig. 3a den Wert D erreicht hat, werden die Signale PWM-STELL und OB wieder abgeschaltet. Am Eingang 30 wirkt dann wieder das Signal REG-OUT, und die Kommutierungssteuerung 120 bewirkt wieder eine normale Kommutierung der Brückenschaltung 122 im motorischen Betrieb. Da derartige Brückenschaltungen in vielerlei Varianten bekannt sind, wird dieser normale motorische Betrieb nicht beschrieben.

Fig. 5 zeigt Einzelheiten der Fig. 4, wobei gleiche oder gleichwirkende Teile wie in Fig. 4 mit denselben Bezugszeichen bezeichnet sind wie dort und gewöhnlich nicht nochmals beschrieben werden. Auch sind nicht alle Einzelheiten der Fig. 4 nochmals wiederholt, sondern es sind nur die wesentlichen Teile dargestellt.

Die Teile des Bremsreglers 24 sind hier mit einer strichpunktierten Linie umrandet. Vom Ausgang des Drehzahlreglers 11, wo das Ausgangssignal REG-OUT im Betrieb anliegt, führt ein Widerstand 150 zur Basis eines npn-Transistors 152, der zusammen mit einem npn-Transistor 154 eine Kippstufe 156 bildet, die eine Schalthysterese hat und die auf Bremsen umschaltet, wenn das Signal REG-OUT in Fig. 3a den niedrigen Wert C erreicht, und die wieder auf motorischen Betrieb (mit Drehzahlregelung) zurückschaltet, wenn REG-OUT in Fig. 3a wieder den höheren Wert D erreicht.

Zur Stromversorgung der Kippstufe 156 und der angeschlossenen Teile wird eine geregelte Gleichspannung von z.B. 12 V verwendet, die zwischen einer Plusleitung 160 und einer Minusleitung 165 liegt, welch letztere, ebenso wie die Minusleitung 20, an Masse (GND) angeschlossen ist.

Die Basis des Transistors 152 ist über einen Widerstand 158 mit der Minusleitung 165 und über einen Widerstand 162 (z.B. 100 kΩ) mit dem Kollektor des Transistors 154 verbunden, dessen Basis ihrerseits über einen Widerstand 164 (z.B. 22 kΩ) mit dem Kollektor des Transistors 152 verbunden ist. Die Kollektoren der Transistoren 152, 154 sind jeweils über einen Widerstand 166 bzw. 168 (z.B. 22 kΩ) mit der Plusleitung 160 verbunden.

An den Kollektor des Transistors 154 ist die Basis eines Transistors 170 angeschlossen, dessen Emitter mit der Minusleitung 165 und dessen Kollektor über einen Widerstand 172 mit der Plusleitung 160, über einen Widerstand 174 mit der Basis eines npn-Transistors 176 und über einen Widerstand 178 mit der Basis eines npn-Transistors 180 verbunden ist.

Der Emitter des Transistors 176 ist mit der Minusleitung 165, sein Kollektor über einen Widerstand 182 mit der Plusleitung 160 verbunden. An diesem Kollektor wird beim Bremsvorgang das Signal OB erzeugt, welches über die Kommutierungsschaltung 120 die oberen Brückentransistoren 124, 128 und 133 öffnet und die unteren Brückentransistoren 125, 129 und 134 leitend macht, sofern nicht für die unteren Brückentransistoren ein vorrangiges PWM-Signal vom PWM-Steller 15 vorliegt.

Der Emitter des Transistors 180 ist mit der Minusleitung 165, sein Kollektor über einen Widerstand 186 mit der Plusleitung 160 und über einen Widerstand 188 mit der Basis eines pnp-Transistors 190 verbunden. Der Emitter des Transistors 190 ist über einen Widerstand 192 (z.B. 2,2 kΩ) mit der Plusleitung 160 verbunden. Sein Kollektor, an dem beim Bremsvorgang, wenn der Transistor 190 leitend ist, das Signal PWM-STELL vorhanden ist, ist mit dem Knotenpunkt 152 zwischen den Widerständen 150 und 28 verbunden.

### Arbeitsweise

Wenn das Signal REG-OUT genügend hoch ist, also in Fig. 3a oberhalb des Wertes B liegt, ist der Transistor 152 leitend und folglich der Transistor 154 der Kippstufe 156 gesperrt.

Wird, weil die Drehzahl auf zu hohe Werte ansteigt, das Signal REG-OUT sehr klein und unterschreitet den Wert C der Fig. 3a, so wird der Transistor 152 gesperrt, und der Transistor 154 wird leitend, wobei die Umschaltung durch die Kippstufe 156 schlagartig erfolgt.

Wenn der Transistor 154 leitend wird, wird der zuvor leitende Transistor 170 gesperrt und macht seinerseits den Transistor 176 leitend, so daß an dessen Kollektor das (niedrige) Signal OB für die Kommutierungssteuerung 120 erzeugt wird.

Ebenso macht der gesperrte Transistor 170 den Transistor 180 leitend, und dieser bewirkt seinerseits ein Leitendwerden des Transistors 190, so daß letzterer das Signal PWM-STELL erzeugt, das als Ersatz-Stellwert anstelle des Signals REG-OUT dem PWM-Steller 15 beim Bremsvorgang zugeführt wird und dann während des Bremsens das Tastverhältnis k des PWM-Stellers 15 bestimmt, sofern nicht die - vorrangige - Strombegrenzung und/oder die - ebenfalls vorrangige - Spannungsbegrenzung einsetzt.

Auf diese Weise erfolgt also die Umschaltung, die in Fig. 1 durch die Schalter 25 und 26 symbolisiert ist, hier rein elektronisch und mit hoher Zuverlässigkeit. Die Hysterese zwischen den Punkten C und D der Fig. 3a ist durch die Schaltelemente der Kippstufe 156 einstellbar. Der Wert D sollte nahe beim Wert B liegen. Letzterer entspricht dem unteren Ende des vorgegebenen Stellbereichs 84' für das Tastverhältnis k.

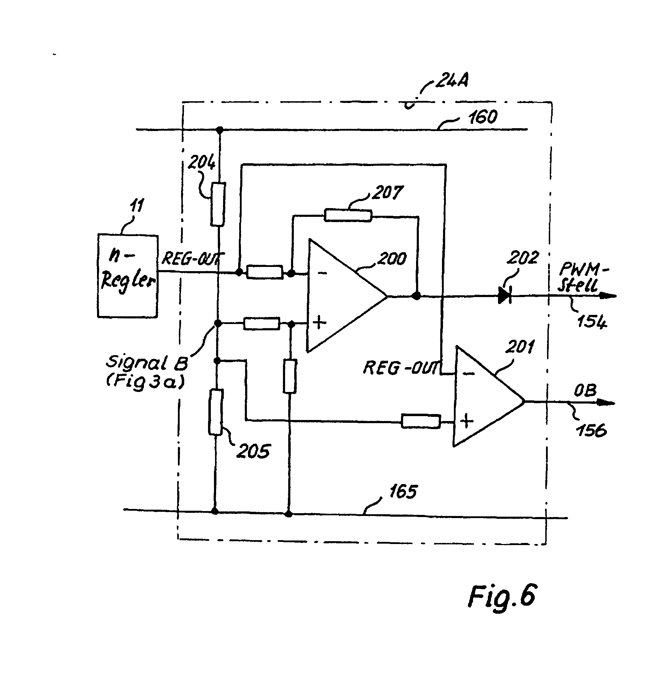

Alternativ ist es auch möglich, die Größe des Ersatz-Stellwerts PWM-STELL davon abhängig zu machen, wie groß die Abweichung des Signals REG-OUT vom Wert B (Fig. 3a) ist, d.h. bei kleinen Überschreitungen der gewünschten Drehzahl wird in diesem Fall nur schwach gebremst, bei hohen Überschreitungen dagegen stärker. Diese verbesserte Alternative ist in Fig. 6 dargestellt.

Diese Figur zeigt also eine Variante zu der Schaltung des Bremsreglers 24, die in Fig. 5 dargestellt ist. Während bei Fig. 5 bei der Umschaltung auf Bremsen ein konstanter Ersatz-Stellwert PWM-STELL erzeugt wird, ist dieser Ersatz-Stellwert bei Fig. 6 abhängig davon, wie groß die Überschreitung der gewünschten Drehzahl nₛₒₗₗ ist: Wird diese Drehzahl nur wenig überschritten, so wird nur ein niedriger Ersatz-Stellwert erzeugt, d.h. das Tastverhältnis der PWM-Signale 32, welche die Höhe des Bremsstroms beim Bremsvorgang bestimmen, wird in diesem Fall relativ klein. Wird aber diese Drehzahl stark überschritten, so wird ein höherer Ersatz-Stellwert erzeugt, und der Bremsstrom wird folglich entsprechend höher. Dies hat den Vorteil, daß das Einschalten und Ausschalten der Bremse ruckfrei vor sich geht, d.h. der Übergang zum Bremsen, und der Übergang vom Bremsen zum motorischen Betrieb, geschieht sanft und ohne merkbare Diskontinuitäten.

Bei Fig. 6 werden zwei Operationsverstärker 200, 201 verwendet. Dem Pluseingang beider Verstärker wird durch einen entsprechend eingestellten Spannungsteiler aus zwei Widerständen 204, 205 ein Potential zugeführt, das dem Potential B in Fig. 3a entspricht, also dem Wert von u_{ST}, bei dem das Tastverhältnis k den Wert 0 % erreicht. Dies entspricht den unteren Spitzen 91 des Dreieckssignals 88, also beim Ausfürungsbeispiel etwa +2 V.

Das Regler-Ausgangssignal REG-OUT vom Drehzahlregler 11 wird in der dargestellten Weise dem Minuseingang beider Operationsverstärker 200, 201 zugeführt. Der Minuseingang des Operationsverstärkers 200 ist über einen Widerstand 207 mit dessen Ausgang verbunden, so daß dieser Operationsverstärker als Verstärker mit einstellbarer Verstärkung arbeitet, und dieser Ausgang ist über eine Diode 202 mit einem Anschluß verbunden, die wie in Fig. 4 mit 154 bezeichnet ist. An ihm tritt beim Bremsen der Ersatz-Stellwert PWM-STELL auf. Da der Operationsverstärker 200, wie gesagt, als Verstärker arbeitet, ist das Signal PWM-STELL = 0, wenn das Signal REG-OUT höher ist als das Potential B. Wird das Signal REG-OUT niedriger, so nimmt PWM-STELL immer mehr zu, je niedriger REG-OUT wird, d.h. die Bremse setzt mit einem sehr niedrigen Bremsstrom ein, und am Ende des Bremsvorgangs liegt ebenfalls ein sehr niedriger Bremsstrom vor, der praktisch unmerklich in den Wert Null übergeht, bevor der motorische Betrieb (mit normaler Drehzahlregelung durch das Stellsignal REG-OUT) wieder aufgenommen wird.

Der Operationsverstärker 201 ist als Komparator geschaltet und erzeugt an seinem Ausgang 156 das Signal OB, wenn REG-OUT niedriger wird als das Potential B. Dieses Signal OB bewirkt, daß die oberen Halbleiterschalter 124, 128 und 133 der Brückenschaltung 122 geöffnet werden, daß die unteren Halbleiterschalter 125, 129 und 134 geschlossen werden, und daß diese unteren Halbleiterschalter der Steuerung durch das PWM-Signal 32 unterliegen. Dies wird nachfolgend noch näher erläutert.

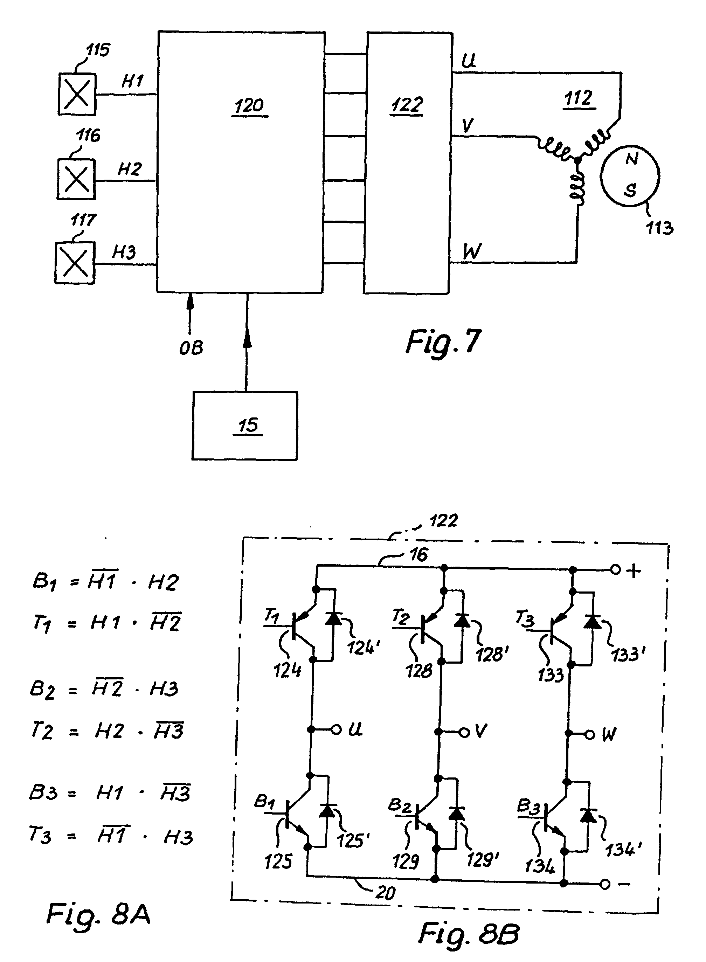

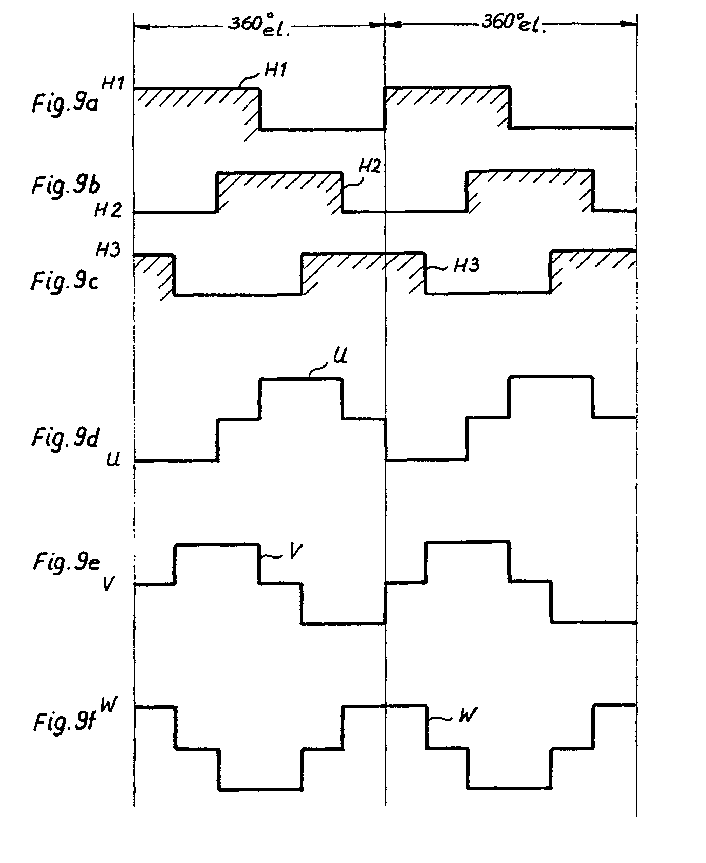

Fig. 7 zeigt nochmals - in Form eines Blockschaltbilds - den grundsätzlichen Aufbau der Elektronik für den ECM 112. Diese verwendet bei diesem Beispiel drei Hallgeneratoren 115, 116 und 117, welche vom Rotormagneten 113 gesteuert werden und Hallsignale H1, H2 und H3 erzeugen, welche der Kommutierungssteuerung 120 zugeführt werden, die ihrerseits die Brückenschaltung 122 steuert. Fig. 9a zeigt das Hallsignal H1, Fig. 9b das Hallsignal H2, und Fig. 9c das Hallsignal H3. Der PWM-Steller 15 (Fig. 2) wirkt auf die Kommutierungssteuerung 120 ein (vgl. nachfolgend Fig. 11), ebenso das Signal OB von der Bremslogik, das in Fig. 4, 5 und 6 dargestellt ist.

Fig. 8B zeigt den prinzipiellen Aufbau der Brückenschaltung 122 mit drei oberen pnp-Brückentransistoren 124, 128 und 133 sowie drei unteren npn-Brückentransistoren 125, 129 und 134. Fig. 8A zeigt die zugehörigen Steuersignale von den Hallgeneratoren 115, 116 und 117. Z.B. wird der obere Brückentransistor 124 gesteuert durch das Signal T1, das aus der logischen Verknüpfung (Konjunktion) des Hallsignals H1 und des negierten Hallsignals H2/gebildet wird. Fig. 8A zeigt die logischen Gleichungen für alle sechs Brückentransistoren. Diese Gleichungen betreffen den Betrieb ohne PWM-Steuerung. Diese hat bei normalem Antrieb (mit Kommutierung) keinen Einfluß auf die oberen Brückentransistoren. Bei Bremsbetrieb kommt für die oberen Brückentransistoren noch eine Verknüpfung mit dem Signal OB (am Ausgang 156) hinzu, d.h. wenn OB = 1 ist, werden die oberen Brückentransistoren gesperrt.

Bei den unteren Brückentransistoren bewirkt das Signal OB = 1, daß diese ständig eingeschaltet und nur dann gesperrt werden, wenn das Signal 32 des PWM-Stellers 15 (Fig. 2) niedrig ist, d.h. hier erfolgt zusätzlich eine Verknüpfung mit dem PWM-Signal 32, um eine Motorstrombegrenzung oder eine Begrenzung der Spannung U_{ZWK} (bei der generatorischen Bremsung) zu ermöglichen, vgl. nachfolgend Fig. 11.

Fig. 9 zeigt die Hallsignale H1, H2 und H3 sowie die Kommutierung der Stränge U (Fig. 9d), V (Fig. 9e) und W (Fig. 9f) des ECM 112 für den Fall, daß keine Drehzahlregelung, Bremsung und auch keine Strombegrenzung stattfindet.

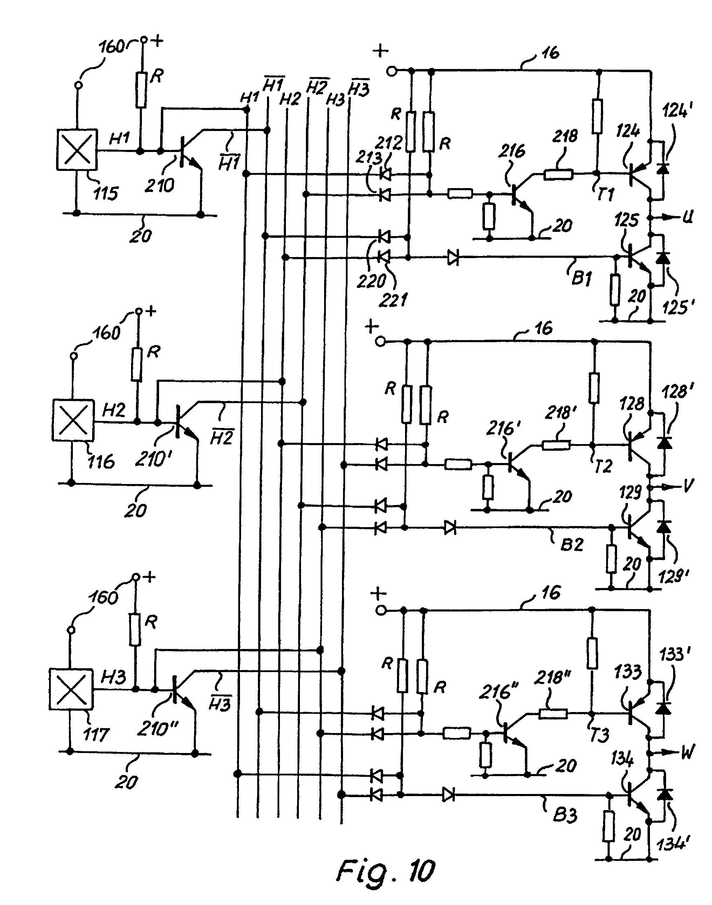

Fig. 10 zeigt die Auswertung der Hallsignale H1, H2 und H3 und der - jeweils durch einen Transistor 210, 210' bzw. 210" invertierten - Hallsignale H1/, H2/bzw. H3/ zur Ansteuerung der Brückentransistoren, und zwar, aus didaktischen Gründen, zunächst ohne PWM-Steuerung (letztere wird bei Fig. 11 gezeigt.)

Wie man erkennt sind die drei Abschnitte der Schaltung nach Fig. 10 weitgehend identisch aufgebaut, mit Ausnahme der für die Ansteuerung verwendeten Hallsignale, die in Fig. 8A aufgeführt sind.

Wie bereits beschrieben (Fig. 8A), dienen zur Ansteuerung des oberen Brückentransistors 124 die Signale H1 und H2/, die über zwei als UND-Glied dienendeDioden 212, 213 zur Basis eines Phasenumkehrtransistors 216 (npn) geführt sind, dessen Kollektor über einen Widerstand 218 mit des Basis des Brückentransistors 124 verbunden ist. Ist das Signal H1 oder das Signal H2/niedrig, so wird der Transistor 216 gesperrt, und durch ihn auch der Brückentransistor 124. Sind beide Signale H1 und H2/ hoch, so leitet folglich der Brückentransistor 124.

Der untere Brückentransistor 125 wird über die ebenfalls als UND-Glied wirkenden Verknüpfungsdioden 220, 221 gesteuert durch die Signale H1/ und H2. Sind beide Signale hoch, so wird der Brückentransistor 125 leitend. Sonst ist er gesperrt.

Der Brückentransistor 128 wird in völlig analoger Weise gesteuert durch seinen Steuertransistor 216', und der Brückentransistor 133 über seinen Steuertransistor 216". Für den Fachmann ergibt sich alles Wesentliche aus der Schaltung.

Fig. 11 zeigt nur die Ansteuerung der beiden Brückentransistoren 124 und 125, da die Ansteuerung der anderen Brückentransistoren völlig analog erfolgt.

Es geht um folgendes:
a) Die zusätzliche Ansteuerung des unteren Brückentransistors 125 durch das PWM-Signal 32 (vgl. Fig. 2). Diese findet statt
   a1) bei einer Begrenzung des Stroms, der durch den antreibenden Motor 112 fließt;
   a2) bei einer Begrenzung des Stroms, der durch den bremsenden Motor 112 fließt;
   a3) bei der Drehzahlregelung des Motors; und
   a4) bei der Begrenzung der Spannung U_{ZWK} beim Bremsen.
b) Die Umschaltung der Brücke 122 durch das Signal OB (von der Bremslogik), z.B. in Fig. 6 vom OP-Verstärker 201.

Das Signal OB wird durch einen npn-Transistor 224 invertiert, an dessen Ausgang man das Signal OB/ erhält, das also niedrig ist, wenn OB hoch ist.

Das Signal OB/ wird über eine Diode 226 einem Knotenpunkt S1 zugeführt, an den auch die Dioden 212 und 213 angeschlossen sind. Man erhält also an S1 die logische Verknüpfung H1&H2/&OB/, d.h. wenn OB/ niedrig ist, wird der oberen Brückentransistor 124 gesperrt, und in völlig analoger Weise die oberen Brückentransistoren 128 und 133.

Das Signal OB/ wird auch der Basis eines npn-Transistors 230 zugeführt und sperrt diesen, wenn es niedrig ist, wodurch die Basis des Brückentransistors 125 ständig über einen Widerstand 232 einen Einschaltstrom von der Plusleitung 16 erhält, d.h. beim Bremsen werden die unteren Brückentransistoren dauernd eingeschaltet, und die Kommutierung wird abgeschaltet. Dazu ist der Emitter des Transistors 230 über die Diode 220 mit dem Signal H1/ und über die Diode 221 mit dem Signal H2 verbunden. Der Kollektor des Transistors 230 ist mit einem Knotenpunkt S2 und über den Widerstand 232 mit der Plusleitung 16 verbunden.

Vom Knotenpunkt S2 führt eine Diode 234 zur Basis des Brückentransistors 125. Ebenso ist der Knotenpunkt S2 über eine Diode 236 mit dem Ausgang des Invertierers 64 (vgl. Fig. 2) verbunden und erhält von dort das PWM-Signal 32. Jedesmal, wenn dieses Signal 32 niedrig wird, erhält der Knotenpunkt S2 ein niedriges Potential und sperrt den unteren Brückentransistor 125. Ist dagegen das PWM-Signal 32 hoch, so bleibt der Brückentransistor 125 dann leitend, wenn er durch die anderen Signale (das Signal OB/, oder die Kombination der Signale H1/ und H2) leitend gesteuert wird. Analoges gilt für die beiden anderen unteren Brückentransistoren 129 und 134.

Das PWM-Signal 32 hat also hier Vorrang, d.h. wenn es niedrig wird, sperrt es den Brückentransistor 125 auf jeden Fall, und in analoger Weise die Brückentransistoren 129 und 134, so daß der Strom im Motor unterbrochen wird, wenn das PWM-Signal 32 niedrig wird. Hierdurch wird, wie bereits beschrieben, eine Strombegrenzung beim Bremsen und eine Begrenzung der Spannung U_{ZWK} ermöglicht.

Auf diese Weise werden beim normalen Betrieb, also mit Kommutierung, jeweils die unteren Brückentransistoren 125, 129 und 134 durch das PWM-Signal 32 gesperrt, wenn der Motorstrom zu hoch wird. Beim Bremsen werden die unteren Brückentransistoren nicht kommutiert, sondern durch das Signal OB (von der Bremslogik) ständig leitend gesteuert, aber auch beim Bremsen werden diese Brückentransistoren dann (durch das PWM-Signal) unterbrochen, wenn der Bremsstrom und/oder die Zwischenkreisspannung U_{ZWK} zu hoch werden.

## Patentansprüche

1. Verfahren zum Steuern oder Regeln eines Elektromotors, welchem über mindestens einen Halbleiterschalter Strom zuführbar ist, welcher Halbleiterschalter im Betrieb über einen PWM-Steller mit einem impulsförmigen Signal angesteuert wird, mit folgenden Schritten:
- Dem Eingang des PWM-Stellers wird zur Steuerung des Tastverhältnisses (k) des impulsförmigen Signals über einen ersten Widerstand ein erstes analoges Signal (Fig. 1: PWM-STELL; REG-OUT) in Form eines ersten Potentials zugeführt, welches eine Funktion mindestens der Motordrehzahl ist;
- beim Auftreten eines vorrangigen zweiten Signals, welches eine Funktion mindestens des Motorstroms ist, wird der Eingang des PWM-Stellers über eine von diesem zweiten Signal gesteuerte Widerstandsanordnung, welche im Vergleich zum ersten Widerstand niederohmig ist, mit einem vom ersten Potential verschiedenen zweiten Potential verbunden, um abhängig von der Größe dieses zweiten Signals das Tastverhältnis zu reduzieren, mit dem der mindestens eine Halbleiterschalter angesteuert wird,
so dass das Potential am Eingang des PWM-Stellers und damit das Tastverhältnis (k) des PWM-Stellers zumindest überwiegend von der Größe des ersten Signals bestimmt wird, solange der Motorstrom einen vorgegebenen Wert nicht überschreitet,
und bei einem Überschreiten dieses vorgegebenen Werts zumindest überwiegend von der Größe des zweiten analogen Signals bestimmt wird.

2. Verfahren nach Anspruch 1, bei welchem das erste analoge Signal ein drehzahlabhängiges oder drehzahlsteuerndes Signal (PWM-STELL) ist.

3. Verfahren nach Anspruch 1, bei welchem das zweite analoge Signal von mindestens einem durch den Motorstrom (iₘₒₜ) gesteuerten Messorgan gesteuert und vor seiner Zuführung zum PWM-Steller gefiltert wird.

4. Verfahren nach Anspruch 3, bei welchem der Elektromotor ein elektronisch kommutierter Motor mit mehreren Strängen ist,
der durch den Motor fließende Strom für jeden Strang separat erfasst wird, und das zweite analoge Signal durch denjenigen Strangstrom bestimmt wird, der im Augenblick am größten ist.

5. Verfahren nach Anspruch 1, bei welchem das zweite analoge Signal zusätzlich von der Gleichspannung (U_{ZWK}) zwischen zwei Leitungen (16, 20) gesteuert wird, an welche der Motor (122) angeschlossen ist
und an welche der Motor bei einem Bremsvorgang Energie zurückliefert, welche die Spannung zwischen diesen Leitungen erhöht.

6. Verfahren nach Anspruch 1, bei welchem der PWM-Steller einen Stellbereich (Fig. 3a: 86) aufweist, in welchem ein dem Betrag nach von Null verschiedenes Eingangssignal (u_{ST}) ein Tastverhältnis (k) des impulsförmigen Signals von 0 % bewirkt.

7. Verfahren nach Anspruch 1, bei welchem dann, wenn das erste analoge Signal in einem vorgegebenen Signalbereich (Fig. 3a: kleiner als C) liegt, es durch ein anderes analoges Signal (PWM-STELL) für den PWM-Steller (15) substituiert wird.

8. Verfahren nach Anspruch 7, bei welchem die Größe des substituierten Signals (PWM-STELL) durch die Größe des Ausgangssignals (REG-OUT) eines dem Motor zugeordneten Drehzahlreglers bestimmt wird.

9. Verfahren nach Anspruch 7, bei welchem die Größe des substituierten Signals (PWM-STELL) durch die Größe eines durch den Motor fließenden Bremsstroms bestimmt wird.

10. Anordnung für einen über mindestens einen Halbleiterschalter (14; 124, 125, 128, 129, 133, 134) mit Strom versorgten Motor (12; 112),
mit einem von einem Stellsignal (u_{ST}) steuerbaren PWM-Steller (15), der bei einer Veränderung dieses Stellsignals innerhalb eines vorgegebenen Stellsignalbereichs (Fig. 3a: 84'), nicht aber außerhalb dieses Stellsignalbereichs, sein Tastverhältnis (k) ändert,
und der dazu dient, abhängig von der Höhe des Stellsignals (u_{ST}) den mindestens einen Halbleiterschalter mit einem der Größe des Stellsignals zugeordneten Tastverhältnis (k) repetitiv aus- und einzuschalten,
ferner mit einer Regelanordnung (11) zur Regelung der Motor-Drehzahl, deren Regler-Ausgangssignal (REG-OUT) einem Eingang (30) des PWM-Stellers (15) über einen Widerstand (28; 150) als Stellsignal zugeführt ist und einen Signalbereich (Fig. 3a: 85') aufweist, der größer ist als der vorgegebene Stellsignalbereich (Fig. 3a: 84'),
und mit einem Messwiderstand (18; 138, 139, 140) zur Erfassung eines Motorstroms (iₘₒₜ),
wobei die Spannung (uₘ) an diesem Messwiderstand dem Eingang eines bei einer vorgegebenen Schwellenspannung ansprechenden Transistors (34, 34', 34"), oder einem Komparator, zugeführt ist, welcher bei seiner Aktivierung vorrangig vor dem Regler-Ausgangssignal (REG-OUT) das Signal am Eingang (30) des PWM-Stellers (15) so verändert, dass dieser Motorstrom (iₘₒₜ) reduziert wird.

11. Anordnung nach Anspruch 10, bei welcher der am Messwiderstand erfasste Motorstrom (iₘₒₜ) die Form von Stromimpulsen aufweist,
und mindestens ein Filter (38) zwischen dem Messwiderstand (18; 138, 139, 140) und dem Eingang (30) des PWM-Stellers (15) vorgesehen ist.

12. Anordnung nach Anspruch 11, bei welcher das Filter als T-Filter (38) ausgebildet ist.

13. Anordnung nach einem der Ansprüche 10 bis 12 für einen elektronisch kommutierten Motor (112) mit mehreren Phasen (U, V, W), die im Betrieb über eine Brückenschaltung (122) mit Strom gespeist werden, wobei separate Strommessschaltungen für einzelne Brückenzweige vorgesehen sind und die Ausgangssignale dieser Strommessschaltungen gemeinsam dem PWM-Steller (15) zuführbar sind, um bei Überschreiten eines vorgegebenen Stromwerts in einem Brückenzweig vorrangig vor dem Regler-Ausgangssignal (REG-OUT) das Signal am Eingang (30) des PWM-Stellers (15) so zu verändern, dass dieser Strom reduziert wird.

14. Anordnung nach Anspruch 13, bei welcher sowohl den einzelnen Strommessschaltungen wie deren gemeinsamem Ausgangssignal Filteranordnungen (38; 36, 36', 36") zugeordnet sind.

## Claims

1. Method for open-loop or closed-loop control of an electric motor to which current can be fed by means of at least one semi-conductor switch which when in operation is actuated by means of a PWM controller with a signal in the form of pulses, having the following steps:
- a first analogue signal (fig. 1: PWM-STELL; REG-OUT) in the form of a first potential which is a function of at least the motor speed, is fed via a first resistor to the input of the PWM controller to control the pulse duty cycle (k) of the signal in the form of pulses;
- when a priority second signal appears which is a function of at least the motor current, the input of the PWM controller is connected with a second potential different from the first potential by means of a resistor arrangement which is controlled by this second signal and is of low resistance compared with the first resistor, in order to reduce the pulse duty cycle with which the at least one semi-conductor switch is actuated according to the magnitude of this second signal so that the potential at the input of the PWM controller and hence the pulse duty cycle (k) of the PWM controller is determined at least predominantly by the magnitude of the first signal as long as the motor current does not exceed a predetermined value, and at least predominantly by the magnitude of the second analogue signal when this predetermined value is exceeded.

2. Method according to claim 1, wherein the first analogue signal is a speed-dependent or speed-controlling signal (PWM-STELL).

3. Method according to claim 1, wherein the second analogue signal is controlled by at least one measuring element controlled by the motor current (iₘₒₜ) and filtered before it is fed to the PWM controller.

4. Method according to claim 3, wherein the electric motor is an electronically commutated motor with a plurality of phase windings, the current flowing through the motor is detected separately for each phase winding, and the second analogue signal is determined by the phase winding current which is the greatest at that moment.

5. Method according to claim 1, wherein the second analogue signal is additionally controlled by the direct-current voltage (U_{ZWK}) between two leads (16, 20) to which the motor (122) is connected and to which during braking the motor returns energy which increases the voltage between these leads.

6. Method according to claim 1, wherein the PWM controller has a control range (fig. 3a: 86) in which an input signal (u_{ST}) other than zero in amount produces a pulse duty cycle (k) of 0% for the signal in the form of pulses.

7. Method according to claim 1, wherein the first analogue signal is substituted by another analogue signal (PWM-STELL) for the PWM controller (15) when the first analogue signal lies in a predetermined signal range (fig. 3a: less than C).

8. Method according to claim 7, wherein the magnitude of the substituted signal (PWM-STELL) is determined by the magnitude of the output signal (REG-OUT) of a speed controller associated with the motor.

9. Method according to claim 7, wherein the magnitude of the substituted signal (PWM-STELL) is determined by the magnitude of a braking current flowing through the motor.

10. Arrangement for a motor (12; 112) supplied with current by means of at least one semi-conductor switch (14; 124, 125, 128, 129, 133, 134), with a PWM controller (15) which can be controlled by a control signal (u_{ST}) and changes its pulse duty cycle (k) when this control signal is changed inside a predetermined control signal range (fig. 3a; 84'), but not outside this control signal range, and which serves to switch the at least one semi-conductor switch repetitively off and on depending on the level of the control signal (u_{ST}) with a pulse duty cycle (k) according to the magnitude of the control signal, and further with a control arrangement (11) for controlling the motor speed, whose controller output signal (REG-OUT) is fed to an input (30) of the PWM controller (15) via a resistor (28; 150) as control signal and exhibits a signal range (fig. 3a: 85') which is greater than the predetermined control signal range (fig. 3a: 84'), and with a measuring resistor (18; 138, 139, 140) for detecting a motor current (iₘₒₜ), whereby the voltage (uₘ) at this measuring resistor is fed to the input of a transistor (34, 34', 34") responding to a predetermined threshold voltage, or to a comparator, which when activated as a priority before the controller output signal (REG-OUT) changes the signal at the input (30) of the PWM controller (15) so that this motor current (iₘₒₜ) is reduced.

11. Arrangement according to claim 10, wherein the motor current (iₘₒₜ) detected at the measuring resistor takes the form of current pulses, and at least one filter (38) is provided between the measuring resistor (18; 138, 139, 140) and the input (30) of the PWM controller (15).

12. Arrangement according to claim 11, wherein the filter is embodied as a T-filter (38).

13. Arrangement according to one of claims 10 to 12 for an electronically commutated motor (112) with a plurality of phases (U, V, W) which when in operation are fed with current via a bridge circuit (122), whereby separate current measuring circuits are provided for individual bridge branches and the output signals of these current measuring circuits can be fed together to the PWM controller (15) so that when a predetermined current value in a bridge branch is exceeded, the signal at the input (30) of the PWM controller (15) is changed as a priority before the controller output signal (REG-OUT) so that this current is reduced.

14. Arrangement according to claim 13, wherein filter arrangements (38; 36, 36', 36") are associated with both the individual current measuring circuits and their common output signal.

## Revendications

1. Procédé pour commander ou régler un moteur électrique, auquel on peut amener du courant au moyen au moins d'un interrupteur à semi-conducteurs, lequel interrupteur est amorcé pendant le fonctionnement par un actionneur à modulation d'impulsions en largeur avec un signal pulsé comportant les étapes suivantes :
- à l'entrée de l'actionneur à modulation d'impulsions en largeur, on amène pour la commande du taux d'impulsions (k) du signal pulsé par l'intermédiaire d'une première résistance un premier signal analogique (figure 1 : PWM-STELL ; REG-OUT) sous la forme d'un premier potentiel, qui a une fonction au moins du régime moteur ;
- lors de l'apparition d'un deuxième signal prioritaire, qui a une fonction au moins du courant moteur, l'entrée de l'actionneur à modulation d'impulsions en largeur est reliée par un dispositif de résistance commandé par ce deuxième signal, qui est à faible valeur ohmique par rapport à la première résistance, est reliée à un deuxième potentiel différent du premier potentiel, afin de réduire en fonction de la grandeur de ce deuxième signal le taux d'impulsions avec lequel le/au moins un interrupteur à semi-conducteurs est amorcé,
de sorte que le potentiel à l'entrée de l'actionneur à modulation d'impulsions en largeur et donc le taux d'impulsions (k) de l'actionneur à modulation d'impulsions en largeur sont déterminés au moins principalement par la grandeur du premier signal, aussi longtemps que le courant moteur ne dépasse pas une valeur prédéfinie,
et est déterminé au moins principalement par la grandeur du deuxième signal analogique lors d'un dépassement de cette valeur prédéfinie.

2. Procédé selon la revendication 1, dans lequel le premier signal analogique est un signal dépendant du régime ou commandant le régime (PWM-STELL).

3. Procédé selon la revendication 1, dans lequel le deuxième signal analogique est commandé par au moins un organe de mesure commandé par le courant moteur (iₘₒₜ) et est filtré avant son arrivée à l'actionneur à modulation d'impulsions en largeur.

4. Procédé selon la revendication 3, dans lequel le moteur électrique est un moteur à commutation électronique avec plusieurs branches,
le courant circulant dans le moteur est enregistré séparément pour chaque branche,
et le deuxième signal analogique est déterminé par le courant de branche qui est maximum à l'instant donné.

5. Procédé selon la revendication 1, dans lequel le deuxième signal analogique est commandé en supplément par la tension continue (U_{ZWK}) entre deux lignes (16, 20) auxquelles le moteur (122) est raccordé
et auxquelles le moteur restitue lors d'une opération de freinage de l'énergie qui augmente la tension entre ces lignes.

6. Procédé selon la revendication 1, dans lequel l'actionneur à modulation d'impulsions en largeur présente une plage de réglage (figure 3a : 86), dans laquelle un signal d'entrée (U_{ST}), dont la valeur est différente de 0, entraîne un taux d'impulsions (k) du signal pulsé de 0%.

7. Procédé selon la revendication 1, dans lequel, dans les cas où le premier signal analogique est situé dans une plage de signal prédéfinie (figure 3a : inférieure à C), il est substitué par un autre signal analogique (PWM-STELL) pour l'actionneur à modulation d'impulsions en largeur (15).

8. Procédé selon la revendication 7, dans lequel la grandeur du signal substitué (PWM-STELL) est déterminée par la grandeur du signal de sortie (REG-OUT) d'un régulateur de régime attribué au moteur.

9. Procédé selon la revendication 7, dans lequel la grandeur du signal substitué (PWM-STELL) est déterminée par la grandeur d'un courant de freinage circulant dans le moteur.

10. Dispositif pour un moteur (12; 112) alimenté en courant au moyen au moins d'un interrupteur à semi-conducteurs (14; 124, 125, 128, 129, 133, 134),
avec un actionneur à modulation d'amplitude en largeur (15) qui peut être commandé par un signal de réglage (U_{ST}), qui modifie son taux d'impulsions (k) dans le cas d'une variation de ce signal de réglage dans les limites d'une plage prédéfinie de signal de réglage (figure 3a : 84'), mais pas en-dehors de cette plage de signal de réglage,
et qui sert à déconnecter et connecter de façon répétitive, en fonction du niveau du signal de réglage (U_{ST}), le/au moins un interrupteur à semi-conducteurs avec un taux d'impulsions (k) attribué à la grandeur du signal de réglage,
équipé également d'un dispositif de réglage (11) pour le réglage du régime moteur, dont le signal de sortie de régulateur (REG-OUT) est amené à une entrée (30) de l'actionneur à modulation d'impulsions en largeur (15) au moyen d'une résistance (28; 150) comme signal de réglage et présente une plage de signal (figure 3a : 85'), qui est supérieure à la plage prédéfinie de signal de réglage (figure 3a : 84'),
et d'une résistance de mesure (18; 138, 139, 140) pour l'enregistrement d'un courant moteur (iₘₒₜ),
moyennant quoi la tension (Uₘ) sur cette résistance de mesure est amenée à l'entrée d'un transistor (34, 34', 34") réagissant à une tension seuil prédéfinie ou à un comparateur, lequel modifie le signal à l'entrée (30) de l'actionneur à modulation d'impulsions en largeur (15) lors de son activation de façon prioritaire avant le signal de sortie du régulateur (REG-OUT) de telle façon que ce courant moteur (iₘₒₜ) est réduit.

11. Dispositif selon la revendication 10, dans lequel le courant moteur (iₘₒₜ) enregistré sur la résistance de mesure présente la forme d'impulsions de courant,
et au moins un filtre (38) est prévu entre la résistance de mesure (18; 138, 139, 140) et l'entrée (30) de l'actionneur à modulation d'impulsions en largeur (15).

12. Dispositif selon la revendication 11, dans lequel le filtre est conçu comme un filtre en T (38).

13. Dispositif selon l'une quelconque des revendications 10 à 12 pour un moteur (112) à commutation électrique avec plusieurs phases (U, V, W), qui sont alimentées en courant pendant le service au moyen d'un circuit en pont (122), des circuits séparés de mesure de courant étant prévus pour des branches de pont individuelles et les signaux de sortie de ces circuits de mesure de courant pouvant être amenés conjointement à l'actionneur à modulation d'impulsions en largeur (15), afin de modifier le signal à l'entrée (30) de l'actionneur à modulation d'impulsions en largeur (15) en cas de dépassement d'une valeur de courant prédéfinie dans une branche de pont de façon prioritaire avant le signal de sortie de régulateur (REG-OUT), de telle façon que ce courant est réduit.

14. Dispositif selon la revendication 13, dans lequel des agencements de filtre (38; 36, 36', 36") sont attribués aussi bien aux circuits individuels de mesure de courant qu'à leur signal de sortie commun.
